# EUROPEAN PATENT APPLICATION

(11) **EP 4 380 000 A1**
(43) Date of publication of application: **05.06.2024**
(21) Application number: 23211033.8
(22) Date of filing: 21.11.2023
(51) Int. Cl.: H02J 7/00

(54) **CHARGER AND CHARGING SYSTEM**

(30) Priority: 23.11.2022 CN 202211478514; 23.11.2022 CN 202223122194 U
(71) Applicant: Greenworks (Jiangsu) Co., Ltd., Changzhou, Jiangsu 213023 (CN)
(72) Inventor: LU, Chuntao, Changzhou / 213023 (CN); YAN, An, Changzhou / 213023 (CN)
(74) Representative: Bergenstråhle & Partners AB

(57) **Abstract**

A charger and a charging system are provided, where the charger includes: a charger body, and an auxiliary support assembly, mounted on the charger body, where the auxiliary support assembly is configured such that when the charger body is plugged into a socket, the auxiliary support assembly is capable of generating a mutual acting force with the socket or an interface on which the socket is located, and the acting force generated by the socket or the interface on the auxiliary support assembly is capable of counteracting or weakening torque generated by the charger body due to gravity of the charger body or an external force. The auxiliary support assembly is disposed on the charger body, so that the mutual acting force generated between the auxiliary support assembly and the socket or the interface on which the socket is located can be used to fasten the charger.

## Description

### CROSS REFERENCE TO RELATED APPLICATION

The present application claims the benefit of priority to a Chinese Patent Application number CN202211478514.9, filed on November 23, 2022, and a Chinese Utility Model Application number CN202223122194.1, filed on November 23, 2022, the disclosure of the above applications is hereby incorporated by reference in their entireties for all purposes.

### TECHNICAL FIELD

The present disclosure relates to the field of charger technologies, and in particular, to a charger and a charging system.

### BACKGROUND

As time progresses, there are increasingly more small chargers with an increasingly higher power and an increasingly heavier weight. When a socket plug interface is loose or a heavy charger is plugged into a socket, the charger is very prone to fall off. Based on data testing, when the charger is greater than or equal to 90 g, there is a high probability of falling off after the charger is plugged. If a charger body is heavier, the charger is more prone to fall off. When the socket plug interface is loose, the probability of falling off is higher.

When the charger is plugged into a wall for use, it is urgent to resolve the problem that the charger falls off due to the loose socket plug interface or a heavy weight thereof.

### SUMMARY

In view of the foregoing disadvantages, an objective of the present disclosure is to provide a charger and a charging system, to resolve a problem that an existing charger is prone to fall off after being plugged into a socket.

To implement the foregoing objective and another related objective, the present disclosure provides a charger, including:
a charger body; and
an auxiliary support assembly, mounted on the charger body, where
the auxiliary support assembly is configured such that when the charger body is plugged into a socket, the auxiliary support assembly is capable of generating a mutual acting force with the socket or an interface on which the socket is located, and the acting force generated by the socket or the interface on the auxiliary support assembly is capable of counteracting or weakening torque generated by the charger body due to gravity of the charger body or an external force.

In an optional embodiment of the present disclosure, the auxiliary support assembly includes a first component and/or a second component, and the first component and/or the second component are/is connected to at least one surface of the charger body, and generate/generates the acting force on the charger body in at least one direction.

In an optional embodiment of the present disclosure, the auxiliary support assembly includes at least one first component, the first component includes a first suction cup and a first connection part, a side that is of the first suction cup and that is away from an adhesive surface is connected to the first connection part, and the first suction cup is mounted on at least one end face of the charger body by using the first connection part.

In an optional embodiment of the present disclosure, the first connection part is connected to the charger body by a combination of one or more connection modes of plugging, threading, bonding, welding, and sleeving.

In an optional embodiment of the present disclosure, a first slot is disposed inwardly on a front end face; and
the first connection part includes a first insertion part, and the first insertion part is detachably plugged into the first slot by means of an interference fit.

In an optional embodiment of the present disclosure, the first slot is disposed at an upper end and a lower end of the front end face, there are two suction cup components, and the two suction cup components are detachably mounted on the upper end and the lower end of the front end face by using respective first insertion parts.

In an optional embodiment of the present disclosure, a central hole that sequentially runs through the first suction cup and the first connection part is disposed on the first component, and the central hole matches an annular sidewall surface of the charger body, so that the suction cup component is capable of being sleeved, in a sealing manner based on the central hole, on a part that is of the annular sidewall surface and that is close to the front end face.

In an optional embodiment of the present disclosure, the second component includes a second connection part, a connection rod, and a positioning component;
a first end of the second connection part is hinged to a first end of the connection rod, and a second end of the second connection part is mounted on a top surface/a bottom surface of the charger body; and
an end that is of the positioning component and that is away from the socket is hinged to a second end of the connection rod.

In an optional embodiment of the present disclosure, the connection rod includes a telescopic rod.

In an optional embodiment of the present disclosure, when the charger is plugged into the socket and the positioning component is positioned on a wall surface on which the socket is located, an included angle between the telescopic rod and the wall surface on which the socket is located is between 30° and 70°.

In an optional embodiment of the present disclosure, the positioning component includes a positioning plate or a second suction cup; and
when the positioning component is the positioning plate, the second end of the second connection part is mounted on the bottom surface of the charger body; or
when the positioning component is the second suction cup, the second end of the second connection part is mounted on the top surface of the charger body.

In an optional embodiment of the present disclosure, a second slot is disposed inwardly on the top surface/the bottom surface; and
the second connection part includes a second insertion part and a first hinge body, a first end of the second insertion part is fixedly connected to the first hinge body, a second end of the second insertion part is plugged into the second slot by means of an interference fit, and the first hinge body is rotatably mounted in an end support cavity of the connection rod.

In an optional embodiment of the present disclosure, a first notched groove is disposed on a side of the connection rod, the first notched groove interconnects with the end support cavity, and the second insertion part is fixedly connected to the first hinge body after passing through the first notched groove.

To implement the foregoing objective and another related objective, the present disclosure further provides a charging system, including: a power tool; and
a charger, connected to the power tool and configured to provide power for the power tool, wherein
the charger includes: a charger body; and
an auxiliary support assembly, mounted on the charger body, wherein
the auxiliary support assembly is configured such that when the charger body is plugged into a socket, the auxiliary support assembly is capable of generating a mutual acting force with the socket or an interface on which the socket is located, and the acting force generated by the socket or the interface on the auxiliary support assembly is capable of counteracting or weakening torque generated due to an external force.

According to the charger and the charging system in the present disclosure, the auxiliary support assembly is mounted on the charger body, and the auxiliary support assembly is configured such that when the charger body is plugged into the socket, the auxiliary support assembly is capable of generating a mutual acting force with the socket or an interface on which the socket is located, and the acting force generated by the socket or the interface on the auxiliary support assembly is capable of counteracting or weakening torque generated by the charger body due to gravity of the charger body or an external force, so that the mutual acting force generated between the auxiliary support assembly and the socket or the interface on which the socket is located is used to fasten the charger to the socket or the interface on which the socket is located. Therefore, the charger is not prone to fall off.

### BRIEF DESCRIPTION OF DRAWINGS

FIG. 1 is a diagram of a three-dimensional structure of a charger according to a first embodiment of the present disclosure;
FIG. 2 is a schematic exploded view of a charger according to a first embodiment of the present disclosure;
FIG. 3 is a partially enlarged view of FIG. 2;
FIG. 4 is a diagram of a three-dimensional structure of a charger according to a second embodiment of the present disclosure;
FIG. 5 is a schematic exploded view of a charger according to a second embodiment of the present disclosure;
FIG. 6 is a diagram of a three-dimensional structure of a charger according to a third embodiment of the present disclosure;
FIG. 7 is a schematic diagram of a three-dimensional structure of an inclined support component of a charger according to a third embodiment of the present disclosure;
FIG. 8 is a schematic diagram of a three-dimensional structure of a positioning component of a charger according to a third embodiment of the present disclosure;
FIG. 9 is a schematic diagram in which a charger is plugged into a socket according to a third embodiment of the present disclosure;
FIG. 10 is a diagram of a three-dimensional structure of a charger according to a fourth embodiment of the present disclosure;
FIG. 11 is a schematic diagram of a three-dimensional structure of an inclined support component of a charger according to a fourth embodiment of the present disclosure; and
FIG. 12 is a schematic diagram in which a charger is plugged into a socket according to a fourth embodiment of the present disclosure.

### DESCRIPTION OF EMBODIMENTS

The following describes implementations of the present disclosure by using specific embodiments. A person skilled in the art may easily learn of other advantages and effects of the present disclosure based on content disclosed in this specification. The present disclosure can be further implemented or applied in some other different specific implementations. Various details in this specification can also be modified or altered based on different viewpoints and applications without departing from the present disclosure.

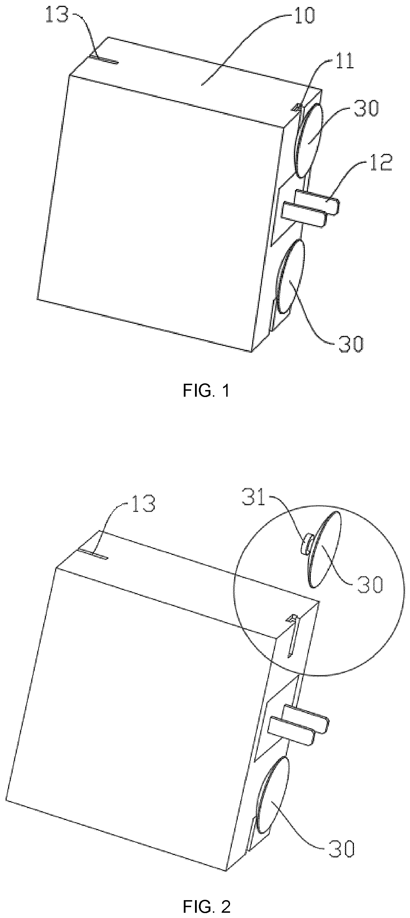

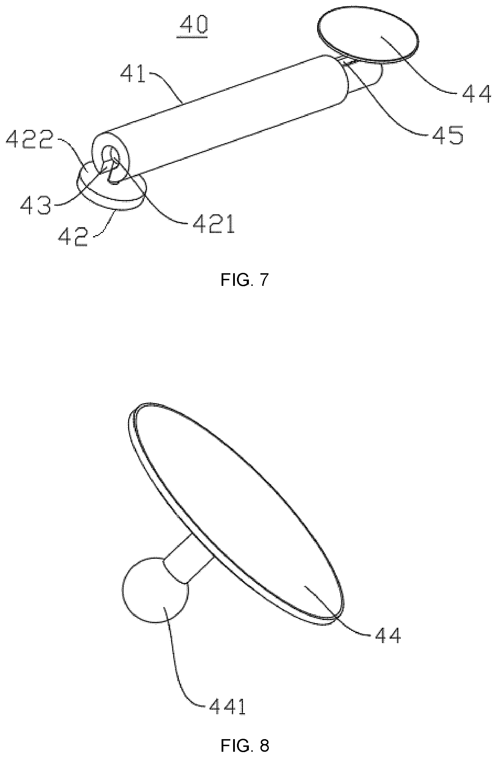

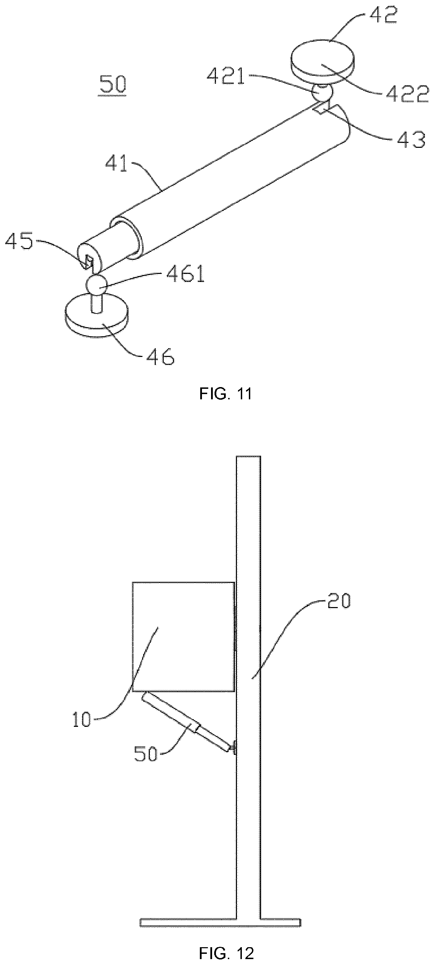

Refer to FIG. 1 to FIG. 12. It should be noted that, the illustrations provided in some embodiments merely describe the basic concept of the present disclosure by using examples. Although the drawings show only components related to the present disclosure, and are not drawn based on a quantity of components, a shape of a component, and a size of a component during actual implementation, a shape, a quantity, and a scale of the components may be arbitrarily changed during actual implementation, and a component layout form may be more complex.

A high-density high-power charger with a weight of 380 g, a maximum power of 180 W, and a volume/weight of 1.15 g per cubic centimeter is used as an example. A length-to-width ratio of such charger is between 0.7 and 1.3, and a thickness-to-length ratio thereof is between 0.5 and 0.7. Such charger is very prone to fall off after being plugged into a socket.

In addition, based on data testing, when the charger is greater than or equal to 90 g, there is a high probability of falling off after the charger is plugged. If a charger body is heavier, the charger is more prone to fall off. In addition, when a socket plug interface is loose, the probability of falling off is higher. To resolve a problem that a heavy charger falls off during use when the heavy charger is plugged into a socket or a socket plug interface is loose, the present disclosure provides a charger with an anti-falling function. FIG. 1 to FIG. 12 are schematic diagrams of structures of a charger with an anti-falling function in four different implementations.

As shown in FIG. 1 to FIG. 12, the charger includes a charger body 10 and an auxiliary support assembly. The auxiliary support assembly is mounted on the charger body 10. The auxiliary support assembly is configured such that when the charger body 10 is plugged into a socket, the auxiliary support assembly is capable of generating a mutual acting force with the socket or an interface on which the socket is located, and the acting force generated by the socket or the interface on the auxiliary support assembly is capable of counteracting or weakening torque generated by the charger body 10 due to gravity of the charger body or an external force (for example, a pulling force generated externally when the charger is connected to a power tool or an electrical appliance). Therefore, a problem that the charger is prone to fall off due to gravity of the charger when the charger is plugged into the socket can be avoided. For example, the socket may be, for example, a wall socket, and an interface on which the wall socket is located may be, for example, a wall surface 20. The socket may be alternatively mounted on a panel, and the panel herein is the interface.

It should be noted that, in the present disclosure, the auxiliary support assembly includes a first component and/or a second component, and the first component and/or the second component are/is connected to at least one surface of the charger body 10, and generate/generates an acting force on the charger body 10 in at least one direction. The following is described in detail by using an example in which the first component is a suction cup component and the second component is an inclined support component.

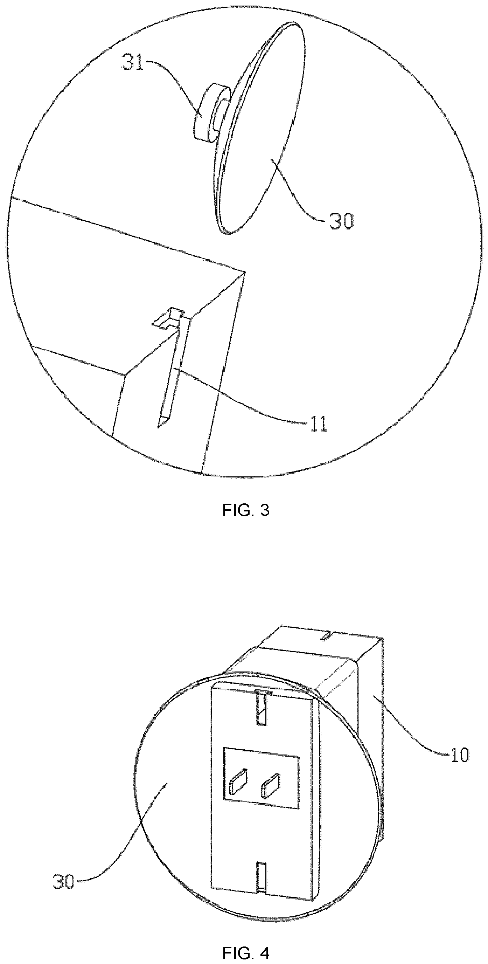

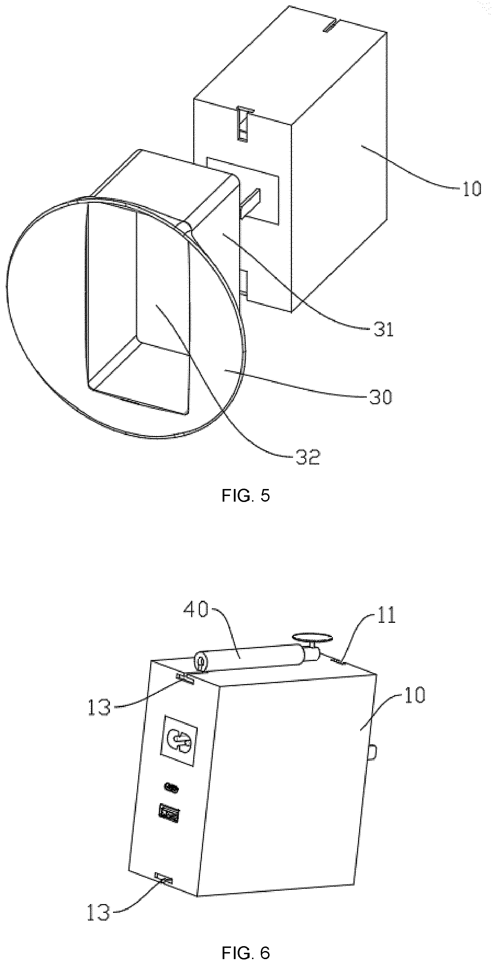

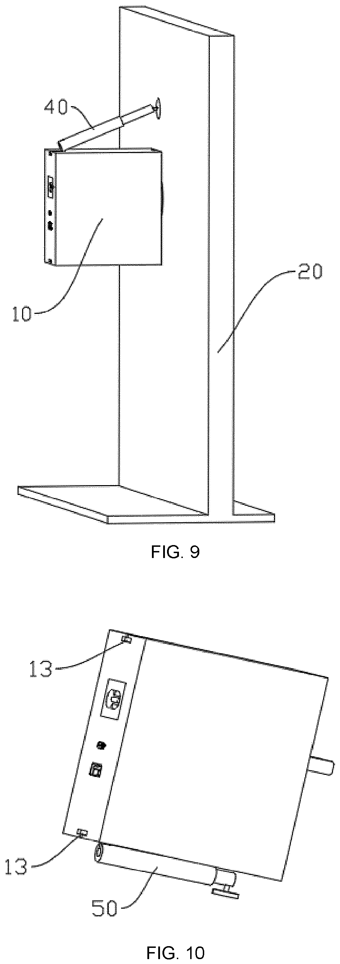

The suction cup component includes a small suction cup component shown in FIG. 1 to FIG. 3 and an integral suction cup component shown in FIG. 4 and FIG. 5, and the inclined support component includes a first inclined support component 40 shown in FIG. 6 to FIG. 9 and a second inclined support component 50 shown in FIG. 10 to FIG. 12.

It should be noted that, for ease of description, that the charger body 10 is substantially in a cubic shape is used as an example for description. A surface, of the charger body 10, on which a charging pin 12 is disposed is defined as a front end face (also referred to as a plug surface), and a surface opposite to the front end face is defined as a rear end face. An output port such as a USB output port, a Type-C output port, an 8-shaped interface and a plum blossom interface may be disposed on the rear end face. Four surfaces other than the front end face and the rear end face are defined as annular sidewall surfaces. A surface located on an upper side of the charger body 10 when the charger body 10 is plugged into the socket is defined as a top surface, and a surface located on a lower side is defined as a bottom surface.

The following describes in detail charger structures with different auxiliary support assemblies in the present disclosure with reference to specific embodiments.

FIG. 1 to FIG. 3 show an implementation of an anti-falling charger according to the present disclosure. In this implementation, the charger includes a charger body 10 and a suction cup component. The suction cup component includes a first suction cup 30 and a first connection part 31, and a side that is of the first suction cup 30 and that is away from an adhesive surface is connected to the first connection part 31. The first suction cup 30 is fixedly or detachably mounted on a front end face of the charger body 10 by using the first connection part 31. The suction cup component is added to the front end face of the charger body. In this way, when the charger body 10 is plugged into a socket, an adhesive force generated between the first suction cup 30 of the suction cup component and the socket or a wall surface 20 on which the socket is located is used to cancel or weaken torque generated by the charger body 10 due to gravity of the charger body or an external force, thereby playing an anti-falling role.

As shown in FIG. 1 to FIG. 3, detachable mounting of the suction cup component to the front end face of the charger body 10 may be implemented in the following manner: a first T-shaped slot 11 is disposed inwardly on the front end face of the charger body 10, and the first T-shaped slot 11 extends from the inside of the front end face to an edge, and penetrates the annular sidewall surface of the charger body 10. The first connection part 31 is disposed as a T-shaped insertion part (first T-shaped insertion part), and the first T-shaped insertion part is detachably plugged into the first T-shaped slot 11 by means of an interference fit, to facilitate detachment when the charger is not in use.

For example, as shown in FIG. 1 to FIG. 3, an upper end and a lower end of the front end face of the charger body 10 are respectively provided with one first T-shaped slot 11, and there are two small suction cup components. The two suction cup components are detachably mounted on the upper end and the lower end of the front end face by using respective first T-shaped insertion parts. Therefore, when the charger body 10 is plugged into the socket, adhesive forces between the suction cup components at the upper end and the lower end of the front end face and the socket or the wall surface 20 on which the socket is located are used to cancel or weaken torque generated by the charger body 10 due to gravity of the charger body or an external force, thereby playing an anti-falling role. Certainly, the first T-shaped slot 11 may be replaced with another type of slot structure, and is not limited to a T-shaped slot structure. Correspondingly, the first T-shaped insertion part is also correspondingly adjusted.

It should be noted that the first T-shaped slot 11 may be disposed at any location on an outer periphery of the front end face of the charger body 10, and there may be one or more T-shaped slots 11. Therefore, the suction cup component may be disposed at any location that is on the front end face of the charger body 10 and that does not affect the charging pin. There may be one or more suction cup components 30. In addition, a shape of the first suction cup 30 of the suction cup component may be a spherical surface or an adhesive surface of any shape.

It should be noted that the suction cup component in the first implementation is connected to the charger body 10 through insertion. In addition, the suction cup component may also be mounted on the charger body 10 in a manner such as buckling, threaded connection, bonding, or welding. The threaded connection is used as an example. For example, an end that is of the first connection part 31 of the suction cup component and that is not connected to the first suction cup 30 may be manufactured into a threaded section, and a threaded hole is disposed at a corresponding location on the charger body 10, thereby implementing a threaded connection between the first connection part 31 and the charger body 10.

FIG. 4 and FIG. 5 show another implementation of an anti-falling charger according to the present disclosure. This implementation is a variation of the first implementation in FIG. 1 to FIG. 3. Different from the charger shown in FIG. 1 to FIG. 3, in this implementation, a size of the first suction cup 30 is larger, and a shape of the first connection part 31 is also different.

Specifically, as shown in FIG. 4 and FIG. 5, the suction cup component includes a first suction cup 30 and a first connection part 31. A side that is of the first suction cup 30 and that is away from an adhesive surface is connected to the first connection part 31. A central hole 32 that sequentially runs through the first suction cup 30 and the first connection part 31 is disposed on the first component, and the central hole 32 matches an annular sidewall surface of the charger body 10, so that the suction cup component is capable of being sleeved, in a sealing manner based on the central hole 32, on a part that is of the annular sidewall surface and that is close to a front end face. The first connection part 31 is formed into an external shape of the charger, so that the entire suction cup component can be sleeved on the charger body 10. When in use, the charger body 10 is directly plugged into the socket, and an adhesive force between the first suction cup 30 and the socket or the wall surface 20 is used to cancel or weaken torque generated by the charger body 10 due to gravity of the charger body or an external force, thereby playing an anti-falling role.

To resolve a problem that the first suction cup 3 in FIG. 1 to FIG. 5 cannot be adhered because the socket or an area that is around the socket and that is adjacent to the wall surface 20 is irregular, FIG. 6 to FIG. 9 show a third implementation of an anti-falling charger according to the present disclosure.

In this implementation, the charger includes a charger body 10 and a first inclined support component 40. The first inclined support component 40 includes a second connection part 42, a connection rod 41, and a second suction cup 44 (used as a positioning component). A first end of the second connection part 42 is hinged to a first end of the connection rod 41, and a second end of the second connection part 42 is mounted on a top surface of the charger body 10. A side that is of the second suction cup 44 and that is away from the socket is hinged to a second end of the connection rod 41. The connection rod 41 is a telescopic rod.

When the charger body 10 is plugged into the socket, a length of the telescopic rod may be adjusted, so that the second suction cup 44 can be adhered to a location that is on the wall surface 20 and that is suitable for adhesion. Therefore, the first inclined support component 40 provides an upward inclined pulling force, and a vertical component of the inclined pulling force is used to cancel or weaken torque generated by the charger body 10 due to gravity of the charger body or an external force. In addition, a horizontal component of the inclined pulling force may be used to provide the charger body 10 with a pressure towards the socket, to prevent the charger from falling off.

As shown in FIG. 6 to FIG. 9, to implement detachable mounting of the first inclined support component 40 to the charger body 10, a second T-shaped slot 13 is disposed inwardly on the top surface of the charger body 10, and the second T-shaped slot 13 extends from the inside of the top surface to an edge, and penetrates the rear end face of the charger body 10. The second connection part 42 includes a second T-shaped insertion part 422 and a first hinge body 421. A first end of the second T-shaped insertion part 422 is fixedly connected to the first hinge body 421, and a second end of the second T-shaped insertion part 422 is detachably plugged into the second T-shaped slot 13 by means of an interference fit. The first hinge body 421 is rotatably mounted in an end support cavity of the connection rod 41. Certainly, the ball hinge connection manner herein may be replaced with a shaft hinge connection manner. Certainly, the second T-shaped slot 13 may be replaced with another type of slot structure, and is not limited to a T-shaped slot structure. Correspondingly, the second T-shaped insertion part is also correspondingly adjusted. Certainly, the second connection part 42 may be connected to the charger body 10 in a manner such as buckling, threaded connection, bonding, or welding.

To limit a motion range of the connection rod 41 and facilitate storage, a first notched groove 43 is disposed on a side that is of the connection rod 41 and that is opposite to the second T-shaped insertion part 422, the first notched groove 43 interconnects with the end support cavity, and the second T-shaped insertion part 422 is fixedly connected to the first hinge body 421 after passing through the first notched groove 43, so that the connection rod 41 can be adjusted only in a specific angle range along the first notched groove.

It should be noted that, to implement a better anti-falling effect, an included angle between the telescopic rod and the wall surface 20 on which the socket is located is between 30° and 70°, for example, 30°, 40°, 50°, 60°, or 70°.

As shown in FIG. 6 to FIG. 9, the second suction cup 44 and the connection rod 41 may be connected in a ball hinge connection manner. Specifically, the second suction cup 44 has a second hinge body 441, and the second hinge body 441 is rotatably mounted in the end support cavity of the connection rod 41. To limit a motion range of the second suction cup 44 and facilitate storage, a second notched groove 45 is disposed on a sidewall at an end that is of the connection rod 41 and at which the second suction cup 44 is disposed, and the second notched groove 45 interconnects with the end support cavity. A tail of the second suction cup 44 is fixedly connected to the second hinge body 441 after passing through the second notched groove 45, so that rotation adjustment of the second suction cup 44 can be performed only in a specific angle range along the second notched groove 45.

It should be noted that, similar to FIG. 10 to FIG. 12, the first inclined support component 40 may be mounted on the bottom surface of the charger body 10. When the charger body 10 is plugged into the socket, a length of the telescopic rod may be adjusted, so that the second suction cup 44 can be adhered to a location that is on the wall surface 20 and that is suitable for adhesion. Therefore, a vertical component of an inclined support force that is provided by the first inclined support component 40 and that is applied to the bottom surface of the charger body near the rear end face is used to cancel or weaken torque generated by the charger body 10 due to gravity of the charger body or an external force, to prevent the charger from falling off.

To resolve a problem that the charger cannot be prevented from falling off through adhesion by using the first suction cup 30 in FIG. 1 to FIG. 5 when the wall surface 20 around the socket is irregular, FIG. 10 to FIG. 12 show a fourth implementation of an anti-falling charger according to the present disclosure.

In this implementation, the charger includes a charger body 10 and a second inclined support component 50. Compared with the first inclined support component 40, the second inclined support component 50 includes a second connection part 42, a connection rod 41, and a positioning component. Different from the first inclined support component 40, a positioning plate 46 instead of the second suction cup 44 is used as the positioning component, and the second inclined support component 50 is mounted on the bottom surface of the charger body 10. Of course, in other embodiments, the positioning plate 46 may also be a suction cup, similar in structure to second suction cup 44.

Specifically, the second inclined support component 50 includes a second connection part 42, a connection rod 41, and a position plate 46. A first end of the second connection part 42 is hinged to a first end of the connection rod 41, and a second end of the second connection part 42 is mounted on the bottom surface of the charger body 10. A side that is of the positioning plate 46 and that is away from the socket is hinged to a second end of the connection rod 41. The connection rod 41 is a telescopic rod. When the charger body 10 is plugged into the socket, a length of the telescopic rod may be adjusted. The charger body 10 applies a force to the positioning plate 46 due to gravity of the charger body, the force is applied along the second inclined support component 50, and a friction force between the positioning plate 46 and the wall surface is used to support the charger at a proper location on the wall surface 20. Therefore, a vertical component of an inclined support force that is provided by the second inclined support component 50 and that is applied to the bottom surface of the charger body near the rear end face is used to cancel or weaken torque generated by the charger body 10 by gravity of the charger body or an external force, to prevent the charger from falling off.

As shown in FIG. 10 to FIG. 12, to implement detachable mounting of the second inclined support component 50 to the charger body 10, a second T-shaped slot 13 is disposed inwardly on a bottom surface of the charger body 10, and the second T-shaped slot 13 extends from the inside of the bottom surface to an edge, and penetrates the rear end face of the charger body 10. Similarly to the mounting manner of the first inclined support component 40, the second inclined support component 50 is detachably mounted on the second T-shaped slot 13 on the bottom surface of the charger body 10 by using the second T-shaped insertion part 422 of the second connection part 42.

It should be noted that, to implement a better anti-falling effect, an included angle between the telescopic rod and the wall surface 20 on which the socket is located is between 30° and 70°, for example, 30°, 40°, 50°, 60°, or 70°.

As shown in FIG. 10 to FIG. 12, the positioning plate 46 and the connection rod 41 may be connected in a ball hinge connection manner. Specifically, the positioning plate 46 has a third ball hinge body 461, and the third ball hinge body 461 is rotatably mounted in the end support cavity of the connection rod 41. To limit a motion range of the positioning plate 46 and facilitate storage, a second notched groove 45 is disposed on a sidewall at an end that is of the connection rod 41 and at which the positioning plate 46 is disposed, and the second notched groove 45 interconnects with the end support cavity. A tail of the positioning plate 46 is fixedly connected to the third ball hinge body 461 after passing through the second notched groove 45, so that rotation adjustment of the positioning plate 46 can be performed only in a specific angle range along the second notched groove 45.

It should be noted that in the present disclosure, in the ball hinge connection manner, the ball hinge body and the corresponding end support cavity may be mounted by means of an interference fit. Therefore, relative locations of two parts connected through ball hinge connection are kept unchanged by using a friction force between the ball hinge body and the corresponding end support cavity without an external force.

It should be noted that in the present disclosure, the suction cup component or the inclined support component may be selected as the auxiliary support assembly based on regularity of the wall surface around the socket and a factor of the charger body 10, or both the suction cup component and the inclined support component may be used as the auxiliary support assembly, to generate a larger force on the auxiliary support assembly with the socket or the wall surface 20 to cancel or weaken torque generated by the charger body due to gravity of the charger body or an external force, thereby increasing an anti-falling probability.

In conclusion, according to the charger in the present disclosure, the auxiliary support assembly is amounted on the charger body 10, and the auxiliary support assembly is configured such that when the charger body 10 is plugged into the socket, the auxiliary support assembly is capable of generating a mutual acting force with the socket or the wall surface 20 on which the socket is located, and an acting force generated by the wall surface 20 on the auxiliary support assembly is capable of counteracting or weakening torque generated by the charger body 10 due to gravity of the charger body or an external force, so that the mutual acting force exerted between the auxiliary support assembly and the socket or the wall surface 20 on which the socket is located is used to fasten the charger to the socket or the wall surface 20 on which the socket is located. Therefore, the charger is not prone to fall off.

The present disclosure further discloses a charging system, including a power tool and a charger adapted to the power tool. The charger is connected to the power tool, and is configured to provide power for the power tool.

The charger includes a charger body 10 and an auxiliary support assembly. The auxiliary support assembly is mounted on the charger body 10. The auxiliary support assembly is configured such that when the charger body 10 is plugged into a socket, the auxiliary support assembly is capable of generating a mutual acting force with the socket or a wall surface 20 (interface) on which the socket is located, and the acting force generated by the socket or the wall surface 20 on the auxiliary support assembly is capable of counteracting or weakening torque generated by the charger body 10 due to gravity of the charger body. Therefore, a problem that the charger is prone to fall off due to gravity of the charger when the charger is plugged into the socket can be avoided. For a detailed structure of the charger, refer to the foregoing descriptions. Details are not described herein again.

In the descriptions in this specification, many specific details such as examples of parts and/or methods are provided to provide a complete understanding of the embodiments of the present disclosure. However, a person skilled in the art will recognize that the embodiments of the present disclosure can be practiced without one or more specific details or by using another device, system, component, method, part, material, part, or the like. In another case, a well-known structure, material, or operation is not specifically shown or described in detail, to avoid blurring the solutions in the embodiments of the present disclosure.

"One embodiment", "embodiment", or "specific embodiment" mentioned in the entire specification means that a specific feature, structure, or characteristic described with reference to the embodiments is included in at least one embodiment of the present disclosure, and is not necessarily in all embodiments. Therefore, the expressions "in one embodiment", "in an embodiment", or "in a specific embodiment" in different parts in the entire specification do not necessarily refer to the same embodiment. In addition, a specific feature, structure, or characteristic of any specific embodiment of the present disclosure may be combined with one or more other embodiments in any suitable manner. It should be understood that other variations and modifications of the embodiments of the present disclosure may be made in accordance with the teachings of this specification, and are considered as part of scope of the present disclosure.

It should also be understood that one or more of the elements shown in the accompanying drawings may also be implemented in a more separate or integrated manner, or may be removed even because the elements are not operable in some cases or may be provided because the elements are useful based on a particular application.

In addition, unless otherwise explicitly specified, any labeled arrow in the accompanying drawings should be considered only as an example, and imposes no limitation. In addition, unless otherwise specified, the term "or" used in this specification generally means "and/or". When it is foreseeable that the term is unclear due to the capability to provide separation or combination, the combination of components or steps is also considered to be specified.

As described in this specification and used throughout the claims below, unless otherwise specified, "one" and "the" include plural references. Similarly, as described in this specification and used throughout the claims below, unless otherwise specified, "in..." includes "in..." and "on...".

The foregoing descriptions (including content in the abstract of the specification) of the embodiments shown in the present disclosure are not intended to be exhaustively enumerated or limit the present disclosure to the precise form disclosed in this specification. Although specific embodiments and examples of the present disclosure are described only for the purpose of illustration in this specification, a person skilled in the art will appreciate and understand that various equivalent modifications may fall within the scope of the present disclosure. As noted, the modifications may be made to the present disclosure based on the foregoing descriptions in the embodiments of the present disclosure, and the modifications fall within the scope of the present disclosure.

Systems and methods have been described in this specification in general to facilitate an understanding of the details of the present disclosure. In addition, various specific details have been provided to provide an overall understanding of the embodiments of the present disclosure. However, a person skilled in the art will recognize that the embodiments of the present disclosure can be practiced without one or more specific details, or can be practiced by using another apparatus, system, accessory, method, component, material, part, or the like. In other cases, well-known structures, materials, and/or operations are not specially shown or described in detail to avoid confusion with various respects of the embodiments of the present disclosure.

Therefore, although the present disclosure has been described with reference to specific embodiments of the present disclosure, modification freedom, various changes, and substitutions also fall within the foregoing disclosure. In addition, it should be understood that, in some cases, some features of the present disclosure are used without departing from the scope of the proposed application and without corresponding use of other features. Therefore, many modifications may be made, so that a particular environment or material is adapted to the substantial scope of the present disclosure. The present disclosure is not intended to be limited to the specific terms used in the claims below and/or specific embodiments disclosed as envisioning to perform the present disclosure in a best manner. However, the present disclosure will include any and all embodiments and equivalents falling within the scope of the appended claims. Therefore, the scope of the present disclosure is determined only by the appended claims.

## Claims

1. A charger, comprising:
a charger body; and
an auxiliary support assembly, mounted on the charger body, wherein
the auxiliary support assembly is configured such that when the charger body is plugged into a socket, the auxiliary support assembly is capable of generating a mutual acting force with the socket or an interface on which the socket is located, and the acting force generated by the socket or the interface on the auxiliary support assembly is capable of counteracting or weakening torque generated by the charger body due to gravity of the charger body or an external force.

2. The charger according to claim 1, wherein the auxiliary support assembly comprises a first component and/or a second component, and the first component and/or the second component being connected to at least one surface of the charger body, and generate/generates the acting force on the charger body in at least one direction.

3. The charger according to claim 2, wherein the auxiliary support assembly comprises at least one first component, the first component comprises a first suction cup and a first connection part, a side that is of the first suction cup and that is away from an adhesive surface is connected to the first connection part, and the first suction cup is mounted on at least one end face of the charger body by using the first connection part.

4. The charger according to claim 3, wherein the first connection part is connected to the charger body by a combination of one or more connection modes of plugging, threading, bonding, welding, and sleeving.

5. The charger according to claim 4, wherein a first slot is disposed inwardly on a front
end face of the charger body; and the first connection part comprises a first insertion part, and the first insertion part is
detachably plugged into the first slot by means of a fit.

6. The charger according to claim 4, wherein a central hole that sequentially runs through the first suction cup and the first connection part is disposed on the first component, and the central hole matches an annular sidewall surface of the charger body, so that the suction cup component is capable of being sleeved, in a sealing manner based on the central hole, on a part that is of the annular sidewall surface and that is close to a front end face of the charger body.

7. The charger according to claim 2, wherein the second component comprises a second connection part, a connection rod, and a positioning component;
a first end of the second connection part is hinged to a first end of the connection rod, and a second end of the second connection part is mounted on a top surface/a bottom surface of the charger body; and
an end that is of the positioning component and that is away from the socket is hinged to a second end of the connection rod.

8. The charger according to claim 7, wherein the positioning component comprises a positioning plate or a second suction cup; and
when the positioning component is the positioning plate, the second end of the second connection part is mounted on the bottom surface of the charger body; or
when the positioning component is the second suction cup, the second end of the second connection part is mounted on the top surface/the bottom surface of the charger body.

9. The charger according to claim 7, wherein a second slot is disposed inwardly on the top surface/the bottom surface; and
the second connection part comprises a second insertion part and a first hinge body, a first end of the second insertion part is fixedly connected to the first hinge body, a second end of the second insertion part is plugged into the second slot by means of an interference fit, and the first hinge body is rotatably mounted in an end support cavity of the connection rod.

10. The charger according to claim 9, wherein a first notched groove is disposed on a side of the connection rod, the first notched groove interconnects with the end support cavity, and the second insertion part is fixedly connected to the first hinge body after passing through the first notched groove.

11. The charger according to claim 7, wherein the connection rod comprises a telescopic rod.

12. The charger according to claim 11, wherein when the charger is plugged into the socket and the positioning component is positioned on a wall surface on which the socket is located, an included angle between the telescopic rod and the wall surface on which the socket is located is between 30° and 70°.

13. A charging system, comprising:
a power tool; and
a charger, connected to the power tool and configured to provide power for the power tool, wherein
the charger comprises: a charger body; and
an auxiliary support assembly, mounted on the charger body, wherein
the auxiliary support assembly is configured such that when the charger body is plugged into a socket, the auxiliary support assembly is capable of generating a mutual acting force with the socket or an interface on which the socket is located, and the acting force generated by the socket or the interface on the auxiliary support assembly is capable of counteracting or weakening torque generated by the charger body due to gravity of the charger body or an external force.
